# EUROPEAN PATENT APPLICATION

(11) **EP 4 472 321 A1**
(43) Date of publication of application: **04.12.2024**
(21) Application number: 23215818.8
(22) Date of filing: 12.12.2023
(51) Int. Cl.: H04W 72/0453, H04W 74/00, H04W 84/12, H04W 74/0808

(54) **DYNAMIC CHANNEL SWITCHING FOR COMMUNICATING A FREQUENCY-AGGREGATED PPDU**

(30) Priority: 30.05.2023 US 202318203257
(71) Applicant: INTEL Corporation, Santa Clara, CA 95054 (US)
(72) Inventor: FANG, Juan, Portland, 97225 (US); STACEY, Robert, Portland, 97210 (US); HUANG, Po-Kai, San Jose, 95131 (US); LI, Qinghua, San Ramon, 94583 (US)
(74) Representative: Viering, Jentschura & Partner mbB Patent- und Rechtsanwälte

(57) **Abstract**

An access-point station (AP) configured for communicating multi-user (MU) physical layer protocol data units (PPDUs) (MU-PPDUs) with plurality of non-AP stations (STAs) using dynamic channel switching may acquire a transmission opportunity (TXOP) on a channel comprising a primary channel and one or more non-primary channels. The AP may encode a channel switching indication frame that may request that at least some of the STAs temporarily switch from operating on the primary channel to operating on one of the non-primary channels. The AP may decode a response frame from each of the STAs that are indicated to switch. Each response frame may be received on the non-primary channel that an indicated STA is requested to switch to. For a downlink (DL) transmission, the AP may encode a DL MU-PPDU comprised of a plurality of PPDUs of different physical layer (PHY) types including at least a first PPDU for transmission on the primary channel to a first STA that had not been instructed to switch to a non-primary channel, and at least a second PPDU for transmission on one of the non-primary channels to a second STA that had been instructed to switch to one of the non-primary channels.

## Description

### TECHNICAL FIELD

Embodiments pertain to wireless communications. Some embodiments relate wireless local area networks (WLANs) that operate in accordance with the IEEE 802.11 standards. Some embodiments relate to IEEE 802.11be Extremely High Throughput (EHT) (i.e., the IEEE P802.11-Task Group BE EHT) (Wi-Fi 7). Some embodiments relate to next generation Wi-Fi (Wi-Fi 8).

### BACKGROUND

One issue with communicating aggregated Physical layer Protocol Data Unit (A-PPDUs) with multiple stations (STAs) is that the current WLAN standards do not allow for different physical layer (PHY) type PPDUs to be aggregated. This results is an inefficient use of bandwidth as portions of the channel end up being non-utilized since some STAs have limited PHY capabilities. This is particularly an issue because the STAs may utilize the same primary channel. Thus there are general needs for systems and methods that improve bandwidth utilization by allowing the transmission of A-PPDUs having PPDUs of different PHY types.

### BRIEF DESCRIPTION OF THE DRAWINGS

FIG. 1 is a block diagram of a radio architecture, in accordance with some embodiments.
FIG. 2 illustrates a front-end module circuitry for use in the radio architecture of FIG. 1, in accordance with some embodiments.
FIG. 3 illustrates a radio IC circuitry for use in the radio architecture of FIG. 1, in accordance with some embodiments.
FIG. 4 illustrates a baseband processing circuitry for use in the radio architecture of FIG. 1, in accordance with some embodiments.
FIG. 5 illustrates a WLAN, in accordance with some embodiments.
FIG. 6 is a table illustrating valid combinations of bit 54 (B54) and bit 55 (B55) in the Common Info field, bit 39 (B39) of the User Info field, and solicited TB PPDU format, in accordance with some embodiments.
FIG. 7 is a table illustrating Triggered TXOP Sharing Mode subfield encoding, in accordance with some embodiments.
FIG. 8 illustrates EHT variant User Info field format in the MU-RTS TXS Trigger frame, in accordance with some embodiments.
FIG. 9A illustrates dynamic channel switching for transmission of a downlink (DL) frequency domain aggregated multi-user PPDU, in accordance with some embodiments.
FIG. 9B illustrates dynamic channel switching for reception of an uplink (UL) frequency domain aggregated multi-user PPDU, in accordance with some embodiments.
FIG. 9C illustrates dynamic channel switching for reception of an uplink (UL) frequency domain aggregated multi-user PPDU, in accordance with some other embodiments.
FIG. 10 is a table illustrating combinations of bit 54 (B54) and bit 55 (B55) in the Common Info field, bit 39 (B39) of the User Info field along with the PHY version identifier subfield in the Special User info field identifies the PPDU PHY format, in accordance with some embodiments.
FIG. 11 illustrates a wireless communication device in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Some embodiments are directed to an access-point station (AP) configured for communicating multi-user (MU) physical layer protocol data units (PPDUs) (MU-PPDUs) with plurality of non-AP stations (STAs) using dynamic channel switching may acquire a transmission opportunity (TXOP) on a channel comprising a primary channel and one or more non-primary channels. The AP may encode a channel switching indication frame that may request that at least some of the STAs temporarily switch from operating on the primary channel to operating on one of the non-primary channels. The AP may decode a response frame from each of the STAs that are indicated to switch. Each response frame may be received on the non-primary channel that an indicated STA is requested to switch to. For a downlink (DL) transmission, the AP may encode a DL MU-PPDU comprised of a plurality of PPDUs of different physical layer (PHY) types including at least a first PPDU for transmission on the primary channel to a first STA that had not been instructed to switch to a non-primary channel, and at least a second PPDU for transmission on one of the non-primary channels to a second STA that had been instructed to switch to one of the non-primary channels. These embodiments as well as others are described in more detail below.

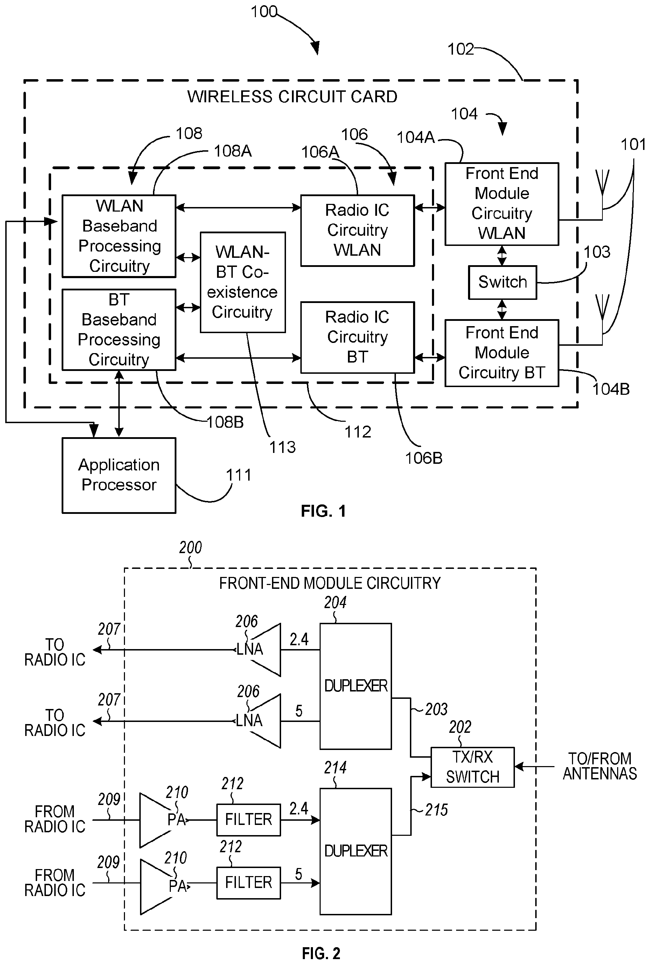

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM CIRCUITRY 104A and FEM CIRCUITRY 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM CIRCUITRY 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or integrated circuit (IC), such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, IEEE 802.11n-2009, IEEE 802.11-2012, IEEE 802.11-2016, , IEEE 802.11ac, IEEE 802.11ax, and/or IEEE P802.11be standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.1 1ax standard. In some embodiments, the radio architecture 100 may be configured for Extremely High Throughput (EHT) communications in accordance with the IEEE 802.11be standard. In these embodiments, the radio architecture 100 may be configured to communicate in accordance with an OFDMA technique, although the scope of the embodiments is not limited in this respect. In some embodiments, the radio architecture 100 may be configured for next generation vehicle-to-everything (NGV) communications in accordance with the IEEE 802.11bd standard and one or more stations including AP 502 may be next generation vehicle-to-everything (NGV) stations (STAs).

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards.

In some embodiments, the radio architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

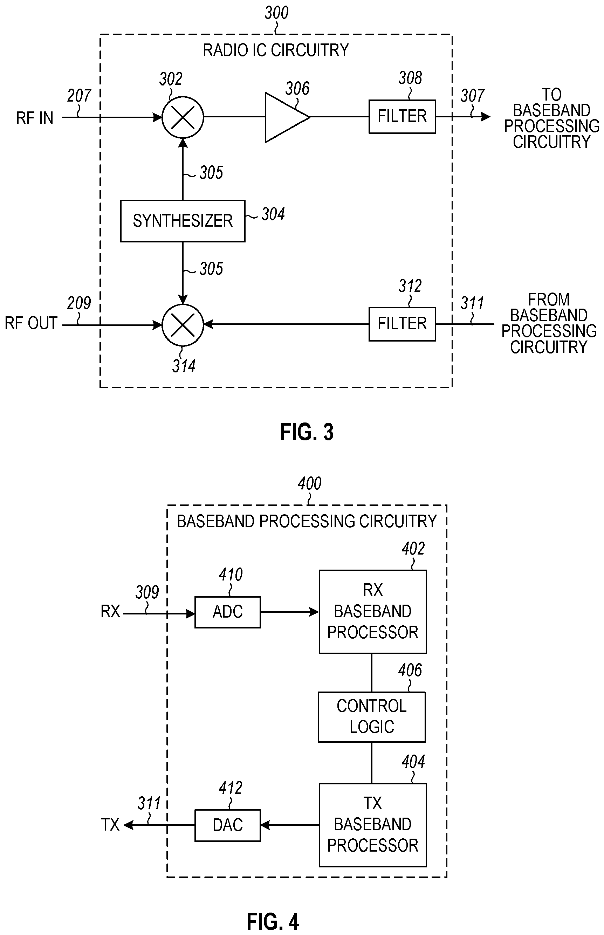

FIG. 3 illustrates radio IC circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer circuitry 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer circuitry 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108A,, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

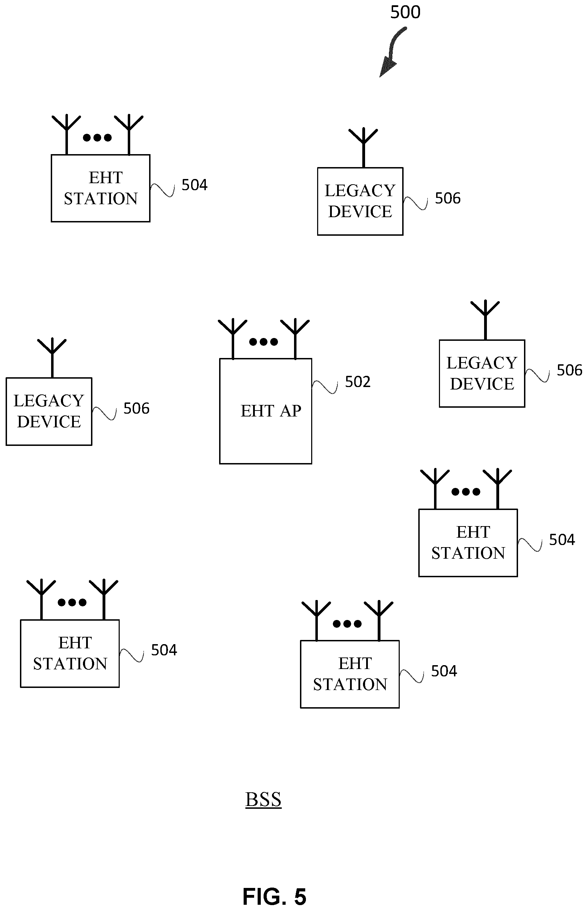

FIG. 5 illustrates a WLAN 500 in accordance with some embodiments. The WLAN 500 may comprise a basis service set (BSS) that may include an access point (AP) 502, which may be an AP, a plurality of stations 504, and a plurality of legacy (e.g., IEEE 802.1 1n/ac/ax) devices 506. In some embodiments, WLAN 500 may be configured for Extremely High Throughput (EHT) communications in accordance with the IEEE 802.11be standard and one or more stations including AP 502 and stations 504 may be EHT STAs. In some embodiments, WLAN 500 may be configured for Ultra-High Rate (UHR) communications in accordance with one of the IEEE 802.11 standards or draft standards and one or more stations including AP 502 and stations 504 may be UHR and/or UHR+ STAs.

In some embodiments, WLAN 500 may be configured for next generation vehicle-to-everything (NGV) communications in accordance with the IEEE 802.11bd standard and one or more stations including AP 502 may be next generation vehicle-to-everything (NGV) stations (STAs).

The AP 502 may be an AP using the IEEE 802.11 to transmit and receive. The AP 502 may be a base station. The AP 502 may use other communications protocols as well as the IEEE 802.11 protocol. The IEEE 802.11 protocol may be IEEE 802.11ax. The IEEE 802.11 protocol may include using orthogonal frequency division multiple-access (OFDMA), time division multiple access (TDMA), and/or code division multiple access (CDMA). The IEEE 802.11 protocol may include a multiple access technique. For example, the IEEE 802.11 protocol may include space-division multiple access (SDMA) and/or multiple-user multiple-input multiple-output (MU-MIMO). There may be more than one AP 502 that is part of an extended service set (ESS). A controller (not illustrated) may store information that is common to the more than one APs 502.

The legacy devices 506 may operate in accordance with one or more of IEEE 802.11 a/b/g/n/ac/ad/af/ah/aj/ay, or another legacy wireless communication standard. The legacy devices 506 may be STAs or IEEE STAs. The STAs 504 may be wireless transmit and receive devices such as cellular telephone, portable electronic wireless communication devices, smart telephone, handheld wireless device, wireless glasses, wireless watch, wireless personal device, tablet, or another device that may be transmitting and receiving using the IEEE 802.11 protocol such as IEEE 802.11ax or another wireless protocol. In some embodiments, the STAs 504 may be termed high efficiency (HE) stations.

AP 502 may communicate with legacy devices 506 in accordance with legacy IEEE 802.11 communication techniques. In example embodiments, AP 502 may also be configured to communicate with STAs 504 in accordance with legacy IEEE 802.11 communication techniques.

In some embodiments, a frame may be configurable to have the same bandwidth as a channel. The frame may be a physical Layer Convergence Procedure (PLCP) Protocol Data Unit (PPDU). In some embodiments, there may be different types of PPDUs that may have different fields and different physical layers and/or different media access control (MAC) layers.

The bandwidth of a channel may be 20MHz, 40MHz, or 80MHz, 160MHz, 320MHz contiguous bandwidths or an 80+80MHz (160MHz) non-contiguous bandwidth. In some embodiments, the bandwidth of a channel may be 1 MHz, 1.25MHz, 2.03MHz, 2.5MHz, 4.06 MHz, 5MHz and 10MHz, or a combination thereof or another bandwidth that is less or equal to the available bandwidth may also be used. In some embodiments the bandwidth of the channels may be based on a number of active data subcarriers. In some embodiments the bandwidth of the channels is based on 26, 52, 106, 242, 484, 996, or 2x996 active data subcarriers or tones that are spaced by 20 MHz. In some embodiments the bandwidth of the channels is 256 tones spaced by 20 MHz. In some embodiments the channels are multiple of 26 tones or a multiple of 20 MHz. In some embodiments a 20 MHz channel may comprise 242 active data subcarriers or tones, which may determine the size of a Fast Fourier Transform (FFT). An allocation of a bandwidth or a number of tones or sub-carriers may be termed a resource unit (RU) allocation in accordance with some embodiments.

In some embodiments, the 26-subcarrier RU and 52-subcarrier RU are used in the 20 MHz, 40 MHz, 80 MHz, 160 MHz and 80+80 MHz OFDMA PPDU formats. In some embodiments, the 106-subcarrier RU is used in the 20 MHz, 40 MHz, 80 MHz, 160 MHz and 80+80 MHz OFDMA and MU-MIMO PPDU formats. In some embodiments, the 242-subcarrier RU is used in the 40 MHz, 80 MHz, 160 MHz and 80+80 MHz OFDMA and MU-MIMO PPDU formats. In some embodiments, the 484-subcarrier RU is used in the 80 MHz, 160 MHz and 80+80 MHz OFDMA and MU-MIMO PPDU formats. In some embodiments, the 996-subcarrier RU is used in the 160 MHz and 80+80 MHz OFDMA and MU-MIMO PPDU formats.

A frame may be configured for transmitting a number of spatial streams, which may be in accordance with MU-MIMO and may be in accordance with OFDMA. In other embodiments, AP 502, STA 504, and/or legacy device 506 may also implement different technologies such as code division multiple access (CDMA) 2000, CDMA 2000 1X, CDMA 2000 Evolution-Data Optimized (EV-DO), Interim Standard 2000 (IS-2000), Interim Standard 95 (IS-95), Interim Standard 856 (IS-856), Long Term Evolution (LTE), Global System for Mobile communications (GSM), Enhanced Data rates for GSM Evolution (EDGE), GSM EDGE (GERAN), IEEE 802.16 (i.e., Worldwide Interoperability for Microwave Access (WiMAX)), BlueTooth^{®}, or other technologies.

Some embodiments relate to HE and/or EHT communications. In accordance with some IEEE 802.11 embodiments (e.g., IEEE 802.11ax embodiments) a AP 502 may operate as a master station which may be arranged to contend for a wireless medium (e.g., during a contention period) to receive exclusive control of the medium for an control period. In some embodiments, the control period may be termed a transmission opportunity (TXOP). AP 502 may transmit a master-sync transmission, which may be a trigger frame or control and schedule transmission, at the beginning of the control period. AP 502 may transmit a time duration of TXOP and sub-channel information. During the control period, STAs 504 may communicate with AP 502 in accordance with a non-contention based multiple access technique such as OFDMA or MU-MIMO. This is unlike conventional WLAN communications in which devices communicate in accordance with a contention-based communication technique, rather than a multiple access technique. During the control period, the AP 502 may communicate with STAs 504 using one or more frames. During the control period, the STAs 504 may operate on a sub-channel smaller than the operating range of the AP 502. During the control period, legacy stations refrain from communicating. The legacy stations may need to receive the communication from the AP 502 to defer from communicating.

In accordance with some embodiments, during TXOP the STAs 504 may contend for the wireless medium with the legacy devices 506 being excluded from contending for the wireless medium during the master-sync transmission. In some embodiments the trigger frame may indicate an uplink (UL) UL-MU-MIMO and/or UL OFDMA TXOP. In some embodiments, the trigger frame may include a DL UL-MU-MIMO and/or DL OFDMA with a schedule indicated in a preamble portion of trigger frame.

In some embodiments, the multiple-access technique used during the TXOP may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. In some embodiments, the multiple access technique may be a Code division multiple access (CDMA).

The AP 502 may also communicate with legacy stations 506 and/or non-legacy stations 504 in accordance with legacy IEEE 802.11 communication techniques. In some embodiments, the AP 502 may also be configurable to communicate with STAs 504 outside the TXOP in accordance with legacy IEEE 802.11 communication techniques, although this is not a requirement.

In some embodiments station 504 may be a "group owner" (GO) for peer-to-peer modes of operation. A wireless device may be a Station 502 or a AP 502.

In some embodiments, the station 504 and/or AP 502 may be configured to operate in accordance with IEEE 802.11mc. In example embodiments, the radio architecture of FIG. 1 is configured to implement the station 504 and/or the AP 502. In example embodiments, the front-end module circuitry of FIG. 2 is configured to implement the station 504 and/or the AP 502. In example embodiments, the radio IC circuitry of FIG. 3 is configured to implement the station 504 and/or the AP 502. In example embodiments, the base-band processing circuitry of FIG. 4 is configured to implement the station 504 and/or the AP 502.

In example embodiments, the Stations 504, AP 502, an apparatus of the Stations 504, and/or an apparatus of the AP 502 may include one or more of the following: the radio architecture of FIG. 1, the front-end module circuitry of FIG. 2, the radio IC circuitry of FIG. 3, and/or the base-band processing circuitry of FIG. 4.

In example embodiments, the radio architecture of FIG. 1, the front-end module circuitry of FIG. 2, the radio IC circuitry of FIG. 3, and/or the base-band processing circuitry of FIG. 4 may be configured to perform the methods and operations/functions herein.

In example embodiments, the station 504 and/or the AP 502 are configured to perform the methods and operations/functions described herein. In example embodiments, an apparatus of the station 504 and/or an apparatus of the AP 502 are configured to perform the methods and functions described herein. The term Wi-Fi may refer to one or more of the IEEE 802.11 communication standards. AP and STA may refer to access point 502 and/or station 504 as well as legacy devices 506.

In some embodiments, the AP and STAs may communicate in accordance with one of the IEEE 802.11 standards. IEEE Std 802.11-2020, IEEE P802.11ax/D8.0, October 2020, IEEE P802.11REVmd/D5.0, IEEE P802.11be/D3.0, January 2023 and IEEE P802.11-REVme/D1.3 are incorporated herein by reference in their entireties.

Embodiments disclosed herein are directed to dynamic channel switching to support DL and UL A-PPDU transmission. In these embodiments, an access-point station (AP) configured for communicating multi-user (MU) physical layer protocol data units (PPDUs) (MU-PPDUs) with plurality of non-AP stations (STAs) using dynamic channel switching may acquire a transmission opportunity (TXOP) on a channel comprising a primary channel and one or more non-primary channels. The AP may encode a channel switching indication frame that may request that at least some of the STAs temporarily switch from operating on the primary channel to operating on one of the non-primary channels. The AP may decode a response frame from each of the STAs that are indicated to switch. Each response frame may be received on the non-primary channel that an indicated STA is requested to switch to. For a downlink (DL) transmission, the AP may encode a DL MU-PPDU comprised of a plurality of PPDUs of different physical layer (PHY) types including at least a first PPDU for transmission on the primary channel to a first STA that had not been instructed to switch to a non-primary channel, and at least a second PPDU for transmission on one of the non-primary channels to a second STA that had been instructed to switch to one of the non-primary channels. These embodiments as well as others are described in more detail below.

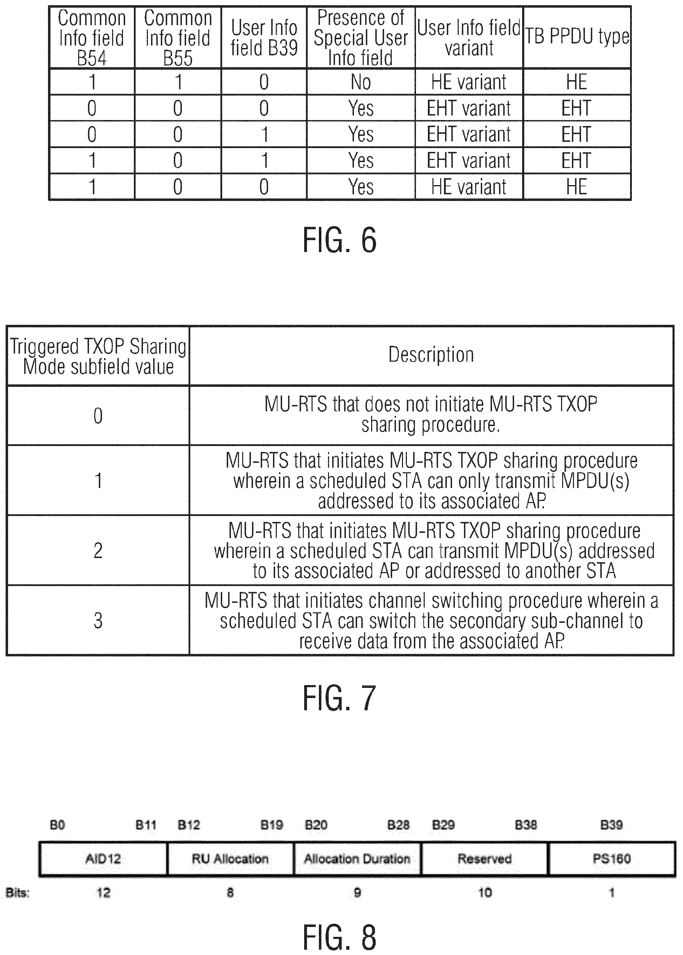

FIG. 6 is a table illustrating valid combinations of bit 54 (B54) and bit 55 (B55) in the Common Info field, bit 39 (B39) of the User Info field, and solicited TB PPDU format, in accordance with some embodiments. An aggregated PPDU is not supported in the current draft of 802.1 1be, where it states that an EHT AP does not transmit a Trigger frame that solicits both an HE TB PPDU and an EHT TB PPDU. However, it did not exclude the possibility where EHT STA could transmit HE/EHT PPDU within A-PPDU as shown in the last two rows in the table of FIG. 6. It may be noted that B54, which is HE/EHT P160 subfield of the EHT variant Common Info field, is set to 1 to indicate a HE PPDU in P160, and set to 0 to indicate EHT PPDU in P160. It may also be noted that B55, which is Special User Info Field Flag in the EHT variant Common Info field, is set to 0 to indicate that a Special User Info field is included in the Trigger frame that contains the EHT variant Common Info field. Otherwise, it does not. It may also be noted that B39, which is reserved for a non-EHT HE STA in an HE variant User Info field. It is the PS160 subfield for an EHT variant User Info field, which is set to 0 to indicate the assigned RU/MRU is within P160, and set to 1 to indicate the assigned RU/MRU is within S160.

In accordance with embodiments, an A-PPDU may enable the STAs of different Wi-Fi amendments (Wi-Fi 7/8/... STAs) be scheduled in one transmission with different PPDU formats. IEEE 802.11be may support up to 320 MHz bandwidth operations, which may be even larger in UHR. A-PPDU would become an important feature to use the available wide bandwidth more efficiently with next generation PHY features as Wi-Fi is evolving. This transmission may be supported in both downlink and uplink. A common info field, a special user info field and a user info field may be defined within the trigger frame to trigger A-PPDU transmission from multiple STAs. Embodiments disclosed herein describe dynamic channel switching to support both DL and UL A-PPDU transmission.

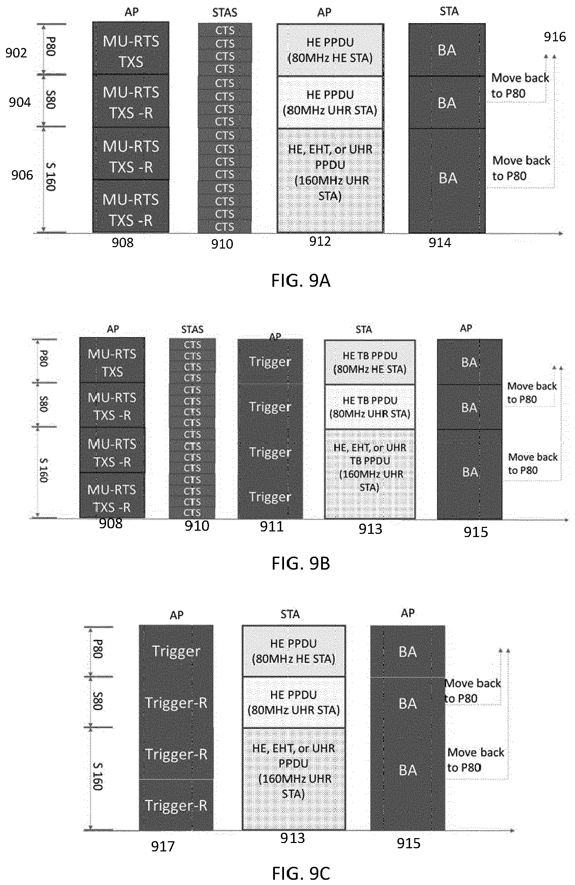

FIG. 7 is a table illustrating triggered TXOP Sharing Mode subfield encoding, in accordance with some embodiments. FIG. 8 illustrates EHT variant User Info field format in the MU-RTS TXS Trigger frame, in accordance with some embodiments. FIG. 9A illustrates dynamic channel switching for transmission of a downlink (DL) frequency domain aggregated multi-user PPDU, in accordance with some embodiments.

For the downlink case illustrated in FIG. 9A, when an AP wins the 160/320 MHz channel and is going to send a DL MU PPDU to multiple 80 MHz capable STAs, it sends an indication to the 80 MHz capable STAs before the DL MU PPDU transmission requiring the STAs to switch to the 80 MHz non-primary channel 904 or the 160 MHz non-primary channel 906 and being ready for the DL MU PPDU reception for certain time. In these embodiments, the channel switching indication frame may be a short new control frame, which may indicate which STA is requested to do channel switching and how long the STA needs to park on the non-primary channel. The channel switching indication frame may also be an existing control frame with some minor modification, such as MU-RTS or BSRP trigger frame. One example is to use existing MU-RTS TXOP sharing frame by using the reserved Triggered TXOP Sharing Mode subfield value as shown below. Or other reserved subfield in the common info field, such as the UL Length, MU-MIMO HE-LTF Mode, Number of HE-LTF Symbols and Midamble Periodicity, UL STBC, LDPC Extra Symbol Segment, AP Tx Power, Pre-FEC Padding Factor, PE Dis-ambiguity, UL Spatial Reuse, and Doppler subfields.

The channel switching information including the STA requested to do channel switching, location of the non-primary channel, the STA requested to switch to, and parking time over the switched non-primary channel will be indicated by the user info field as below. AID12 subfield indicates the STA, which is requested to do channel switching. RU Allocation subfield in an EHT or UHR variant User Info field along with the PS160 subfield identifies the allocated RU or MRU for the DL data transmission to the STA with this AID, if the RU or MRU is over the non-primary 80 /160 MHz channel, the STA is requested to do channel switching. There may be one reserved bit between B29-B38 in the user info field used to indicate whether channel switching is requested or not for the STA with the AID. Allocation Duration subfield indicates how long the STA need to park over the non-primary channel. After the allocation duration field, the STA shall switch back to the 80 MHz primary channel.

Upon the reception of the MU-RTS TXS frame 908, the STA, which has found its AID in one for the user info fields, will response the CTS frame 910 following the existing MU-RTS/CTS protocol. For the STA that is requested to receive data over the non-primary 80 MHz channel needs to do channel switching and feedback the CTS frame over the channel including the non-primary channels, which the STA requested to switch to. Padding in the MU-RTS frame may be needed to give the STA enough time to complete the channel switching before the CTS response. The MU-RTS TXS frame may only be sent to the STA those requested to do channel switching.

Upon the reception of the CTS frame 910, the AP will initiate transmission of the DL MU PPDU 912. With the flexibility of the per 80 MHz U-SIG, per 80 MHz EHT-SIG and also per 80 MHz punction indication definition, the AP is able to send DL MU A-PPDU in 80 MHz unit in parallel over the 160/320 MHz channel as long as the preamble, OFDM symbol duration and cyclic prefix length are aligning among 80 MHz channels. Each 80 MHz U-SIG may define one PPDU format, how many PPDU formats may be supported within single A-PPDU may be defined in the spec. For example, it may be single PPDU format per each 80 MHz channel or single PPDU format per each 160 MHz channel.

After the transmission of the BA 914 to the AP, the STA is requested to switch back 916 to the 80 MHz primary channel 902 if the allocation time is expired.

FIG. 9B illustrates dynamic channel switching for reception of an uplink (UL) frequency domain aggregated multi-user PPDU, in accordance with some embodiments. For the UL case illustrated in FIG. 9B, when AP acquires the 160/320 MHz channel and is going to trigger UL TB PPDU from multiple 80 MHz capable STAs, it may follow some of the steps in the DL case to switch the 80 MHz capable STAs to non-primary 80 MHz channels. After that, AP may send trigger frames in 80 MHz unit over wide bandwidth in parallel as long as the preamble, OFDM symbol duration and cyclic prefix length are aligning among 80 MHz channels. The trigger frame over each 80 MHz channel is used to trigger the STA with the allocation RU or MRU over that 80 MHz channel. Trigger frame over each 80 MHz channel may define one PPDU format, how many PPDU formats may be supported within single A-PPDU may be defined in the spec. For example, it may be single PPDU format per each 80 MHz channel or single PPDU format per each 160 MHz channel.

After the UL TB PPDU and DL BA exchange between the AP and the STAs, the STAs are requested to switch back to the 80 MHz primary channel if the allocation time is expired.

FIG. 9C illustrates dynamic channel switching for reception of an uplink (UL) frequency domain aggregated multi-user PPDU, in accordance with some other embodiments. For the UL case illustrated in FIG. 9C, when AP acquires the 160/320 MHz channel and is going to trigger UL TB PPDU from multiple 80 MHz capable STAs, it may send duplicate trigger frames over each 80 MHz channels. The UL STA may get the allocated RU or MRU, PPDU PHY format and other transmission parameter by checking the Common Info field, Special User Info field and the User Info field in the trigger frame.

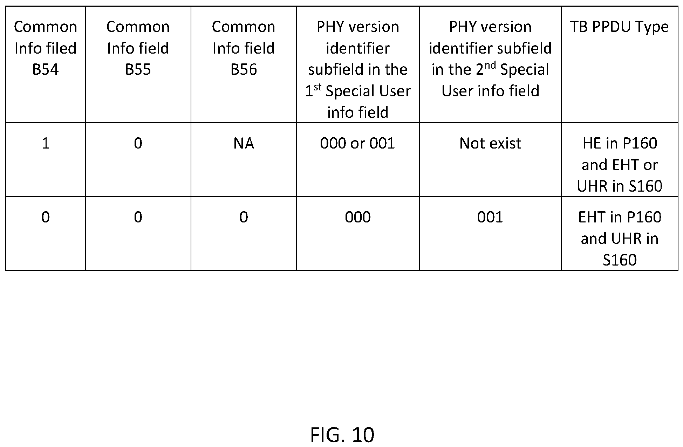

FIG. 10 is a table illustrating combinations of bit 54 (B54) and bit 55 (B55) in the Common Info field, bit 39 (B39) of the User Info field along with the PHY version identifier subfield in the Special User info field identifies the PPDU PHY format, in accordance with some embodiments. In these embodiments, B54, B55 and possibly B56 in the Common Info filed along with the PHY version identifier subfield in the Special User info field identifies the PPDU PHY format. Two examples with single PPDU Type per 160 MHz are shown in FIG. 10. Single PPDU Type per 80 MHz may also be defined by adding special User info field per 80 MHz, but it may only be supported by UHR or UHR+ STAs.

In these embodiments, the RU Allocation subfield along with the P160 subfield in an HE variant User Info field, EHT variant User Info field or UHR variant User Info field identifies the size and the location of the RU or MRU assigned to the STA. If the assigned RU or MRU is over the non-primary 80/160 MHz channel, the STA is requested to do channel switching and feedback UL TB PPDU over the assigned RU or MRU SIFS time after the reception of the trigger frame. There may be one reserved bit between B29-B38 in the User Info field used to indicate whether channel switching is requested or not for the STA.

Padding in the Triger frame may be needed to give the STA enough time to complete the channel switching before the UL TB PPDU response. After the UL TB PPDU and DL BA exchange between the AP and the STAs, the STAs are requested to switch back to the 80 MHz primary channel if the allocation time is expired.

The protocol described herein may also be used for 20 MHz, 40 MHz capable STAs as long as the STA is able to read wide bandwidth signaling information. The trigger frame will also be requested to be transmitted in 20 or 40 MHz unit over a wide bandwidth.

Referring to FIG. 9A, an access-point station (AP) configured for communicating multi-user (MU) physical layer protocol data units (PPDUs) (MU-PPDUs) with plurality of non-AP stations (STAs) using dynamic channel switching may acquire a transmission opportunity (TXOP) on a channel comprising a primary channel 902 and one or more non-primary channels 904 906. The AP may encode a channel switching indication frame 908 for transmission during the TXOP. In these embodiments, the channel switching indication frame 908 may request that at least some of the STAs temporarily switch from operating on the primary channel to operating on one of the non-primary channels. In these embodiments, the AP may decode a response frame 910 from each of the STAs that are indicated to switch. Each response frame may be received on the non-primary channel that an indicated STA is requested to switch to.

In these embodiments, for a downlink (DL) transmission, the AP may encode a DL MU-PPDU 912 for transmission to scheduled STAs of the plurality. The DL MU-PPDU 912 may be configurable to be comprised of a plurality of PPDUs of different physical layer (PHY) types. In these embodiments, the plurality of PPDUs may include at least a first PPDU for transmission on the primary channel to a first STA that had not been instructed to switch to a non-primary channel, and at least a second PPDU for transmission on one of the non-primary channels to a second STA that had been instructed to switch to one of the non-primary channels.

In these embodiments, after expiration of the TXOP, the AP may communicate with the STAs on the primary channel since the STAs that have been instructed to switch have moved back 916 to their primary channel.

In some embodiments, the channel switching indication frame 908 may be encoded to include channel switching information comprising, for each STA that is indicated to switch, a location of the non-primary channel to temporarily switch to and a duration within the TXOP that the STA is to temporarily remain on the non-primary channel (i.e., a parking time). In some embodiments, the duration may be within the TXOP although this is not a requirement as the duration may extend beyond the TXOP.

In some embodiments, the channel may be a 320 MHz channel and the DL MU-PPDU 912 may be transmitted on the 320 MHz channel to the plurality of non-AP STAs. In these embodiments, each STA may have at least an 80 MHz capability. In these embodiments, the 320 MHz channel may comprise a 160 MHz primary channel (P160) and a 160 MHz non-primary channel (S 160) 906, and the P160 may comprise a 80 MHz primary channel (P80) 902 and a 80 MHz non-primary channel (S80) 904. In these embodiments, the AP may encode the first PPDU for transmission on the 80 MHz primary channel 902 to a first 80 MHz STA that had not been instructed to switch to a non-primary channel. In these embodiments, the AP may also encode the second PPDU for transmission on the 80 MHz non-primary channel 904 to the second STA that had switched to the 80 MHz non-primary channel 904. In these embodiments, the AP may also encode a third PPDU for transmission on the 160 MHz non-primary channel 906 to a third STA that had switched to the 160 MHz non-primary channel 906.

In some embodiments, a PHY type of each PPDU of the DL MU-PPDU may be configured to be compatible with a PHY type of a receiving STA. In these embodiments, the PHY type may be encoded in an 80 MHz EHT universal signal (U-SIG) field of each PPDU. In some of these embodiments, bits 3 - 7 (B3-B7) of the U-SIG-2 field may be used to indicate puncturing information (e.g., which 20MHz subchannel(s) will be punctured. In some embodiments, the U-SIG field content in different 80 MHz frequency subblocks may be different. For a 160/320 MHz EHT TB PPDU, the U-SIG content may be identical in all non-punctured 20 MHz subchannels within the PPDU bandwidth. An EHT MU PPDU with TXVECTOR parameter EHT_PPDU_TYPE equal to 1 or 2 may have the same U-SIG content for all non-punctured 20 MHz subchannel for all PPDU bandwidths. In these embodiments, the Punctured Channel Information field may have different values between different 80 MHz frequency subblocks in an EHT MU PPDU with TXVECTOR parameter EHT_PPDU_TYPE equal to 0.

In some embodiments, for transmission of the DL MU-PPDU, the AP may be configured to align preambles, orthogonal frequency division multiplexed (OFDM) symbol durations and cyclic prefix lengths of each 80 MHz transmission that comprises the first, second and third PPDUs.

In some embodiments, when the third STA is a 160 MHz ultra-high rate (UHR) STA that was requested to switch from operating on the 160 MHz primary channel to the 160 MHz non-primary channel, the third PPDU may comprise one of a high-efficiency (HE) PPDU, an extremely high throughput (EHT) PPDU and a UHR PPDU that is transmitted on the 160 MHz non-primary channel. In these embodiments, when the second STA is an 80 MHz UHR or UHR+ STA that was requested to switch from operating on the 80 MHz primary channel to the 80 MHz non-primary channel, the second PPDU may comprise an HE EHT or UHR PPDU transmitted on the 80 MHz non-primary channel. In these embodiments, when the first STA is an 80 MHz STA that had not been requested to switch to operating on a non-primary channel, the first PPDU may comprise an HE PPDU transmitted on the 80 MHz primary channel.

In some embodiments, the channel switching indication frame 908 may comprise a management frame or a control frame and may be transmitted to each STA of the plurality on the 80 MHz primary channel 902. In some embodiments, the management frame may comprise an 80 MHz multi-user request to send transmission (MU-RTS TXS) frame that is repeated (i.e., MU-RTS TXS-R) on each of the non-primary channels. As illustrated in FIG. 9A, the repeat of the MU-RTS TXS (i.e., the MU-RTS TXS-R) is transmitted on the S80 and on each 80 MHz bandwidth of the S160). In these embodiments, the MU-RTS frame initiates the channel switching procedure in which a scheduled STA switches to a non-primary channel to receive date from its associated AP.

In some embodiments, the response frames received from the STAs comprise clear-to-send (CTS) frames 910. In these embodiments, the CTS frames may be received from the STAs that are indicated to switch over one or more 20 MHz subchannels of an indicated non-primary channel.

In some embodiments, the AP may decode a block acknowledgement (BA) frame received from the STAs. The BA frame may be received from each STA that had been requested to switch to a non-primary channel on the non-primary channel. In these embodiments, each of the STAs that had been requested to switch to a non-primary channel may be configured to switch back to the primary channel after transmission of the BA frame (as illustrated in FIG. 9A).

In some embodiments, for reception of an uplink (UL) trigger-based (TB) MU PPDU 913 (see FIG. 9B) from the plurality of STAs using dynamic channel switching, the AP may, after receipt of a response frame 910 from each of the STAs that are indicated to switch, encode a trigger frame 911 for transmission to each of the STAs that are indicated to switch on the non-primary channel that an indicated STA is requested to switch to. In these embodiments, the AP may be configured to align preambles, orthogonal frequency division multiplexed (OFDM) symbol durations and cyclic prefix lengths of the trigger frames 911 as illustrated in FIG. 9B. In these embodiments, each 80 MHz transmission may comprise a trigger frame with aligned preambles, OFDM symbol durations and cyclic prefix lengths). In these embodiments, the trigger frames 911 may be encoded to provide the STAs of the plurality a resource unit (RU) or MRU allocation for transmission of a TB PPDU. In these embodiments, the AP may decode the TB MU PPDU 913 comprised of a plurality of PPDUs configurable to be of different physical layer (PHY) types.

In some embodiments, for reception of an uplink (UL) trigger-based (TB) MU PPDU from the plurality of STAs using dynamic channel switching, the AP may encode a trigger frame 917 (FIG. 9C) to trigger channel switching for at least some of the STAs switch from operating on the primary channel to operating on one of the non-primary channels. In these embodiments, a separate channel switching indication frame and response frames from each of the STAs is not required. An example of this is illustrated in FIG. 9C. In some embodiments, the trigger frame 917 may be transmitted over an 80 MHz primary channel of the 320 MHz channel and duplicated (i.e., repeated) over other 80 MHz portions of the 320 MHz channel, although the scope of the embodiments is not limited in this respect.

In some embodiments, the plurality of PPDUs of the different PHY types may include at least a first PPDU received on the primary channel from the first STA that had not been instructed to switch to a non-primary channel, and at least a second PPDU received on one of the non-primary channels from the second STA that had been instructed to switch to the one of the non-primary channels. In these embodiments, after expiration of the TXOP, the AP may be configured to communicate with the STAs on the primary channel since the STAs have moved back 916 to their primary channel.

In some embodiments, after receipt of the TB MU PPDU 913, the AP may encode a block acknowledgement (BA) frame 915 (see FIG. 9B) for transmission to each of the STAs in response to reception of one of the PPDUs. In these embodiments, the BA may be transmitted to each STA on a non-primary channel that had been requested to switch to a non-primary channel on the non-primary channel. In these embodiments, each of the STAs that had been requested to switch to a non-primary channel may be configured to switch back to the primary channel after reception of the BA frame (i.e., before expiration of the TXOP).

In some embodiments, for triggering of the UL MU PPDU 913 on a 320 MHz channel from the plurality of non-AP STAs where each STA has at least an 80 MHz capability, the AP may encode each trigger frame for transmission over an 80 MHz portion of the 320 MHz channel. In some embodiments, the trigger frame 911 may be transmitted over an 80 MHz primary channel of the 320 MHz channel and duplicated (i.e., repeated) over other 80 MHz portions of the 320 MHz channel.

In some embodiments, the AP may encode the trigger frame 911 to include a Common Info field followed by one or more Special User Info fields. In these embodiments, the Common Info field and the one or more Special User Info fields may be encoded to solicit a trigger-based (TB) Frequency Aggregated Physical layer Protocol Data Unit (PPDU) (FA-PPDU) that includes more than one PPDU of at least two different physical layer (PHY) types from the two or more of the STAs, the different PHY types including high-efficiency (HE), Extremely High Throughput (EHT), Ultra-High Rate (UHR), and UHR+. In these embodiments, when the trigger frame contains one of an EHT, UHR and UHR+ variant Common Info field, the Common Info field may be encoded to indicate whether a Special User Info field is included in the trigger frame. In these embodiments, the Special User Info field may follow the Common Info field in the trigger frame.

In these embodiments, when the Special User Info field is included in the trigger frame, the Special User Info field may include a PHY version identifier to indicate whether the trigger frame contains the EHT variant Common Info field, the UHR variant Common Info field or the UHR+ variant Common Info field. In these embodiments, when the trigger frame contains one of the EHT, the UHR and the UHR+ variant Common Info field and when the Common Info field is encoded to indicate that the Special User Info field is included in the trigger frame, the AP may indicate whether a second Special User Info field is included in the trigger frame.

In these embodiments, the trigger frame may contain one of the EHT, the UHR and the UHR+ variant Common Info field. In these embodiments, when the trigger frame is encoded to include the Special User Info field, the trigger frame may also be encoded to include one or more User Info fields following the Special User Info field. In these embodiments, each of the User Info fields may contain information for a trigger-based PPDU transmission by a STA of a first group of one or more STAs. In these embodiments, the PHY version identifier of the Special User Info field may be encoded to indicate a PHY type for the trigger-based PPDU transmission by each STA of the first group.

In some of these embodiments, when the trigger frame contains one of the EHT, the UHR and the UHR+ variant Common Info field and when the trigger frame is encoded to include the second Special User Info field, the trigger frame may further be encoded to include one or more second User Info fields following the second Special User Info field. In these embodiments, each of the second User Info fields may contain information for a trigger-based PPDU transmission by a STA of a second group of one or more STAs. In these embodiments, a PHY version identifier of the second Special User Info field may be encoded to indicate a PHY type for the trigger-based PPDU transmission by each STA of the second group.

Some embodiments are directed to non-transitory computer-readable storage medium that stores instructions for execution by processing circuitry of an access-point station (AP).

Some embodiments are directed to a non-access-point station (STA) configured for reception of a multi-user (MU) physical layer protocol data units (PPDUs) (MU-PPDUs) from an access point (AP) station (AP) using dynamic channel switching. In these embodiments, the STA may decode a channel switching indication frame 908 received from the AP during a transmission opportunity (TXOP) acquired by the AP on a channel comprising a primary channel 902 and one or more non-primary channels 904 906. The channel switching indication frame 908 may request that the STA switch from operating on the primary channel to operating on one of the non-primary channels. The STA may encode a response frame 910 for transmission to the AP on the non-primary channel that the STA is requested to switch to. In these embodiments, the STA may also decode a PPDU from the AP on the non-primary channel that the STA had been instructed to switch to and, after expiration of the TXOP, the STA may switch back to operating on the primary channel.

In some embodiments, an access point station (AP) generates a trigger frame (TF) for transmission to two or more non-AP stations (STAs) or groups of STAs. In these embodiments, the trigger frame may allocate resource units (RUs) for a trigger-based (TB) transmission to the two or more STAs. In these embodiments, the AP may encode the trigger frame to include a Common Info field followed by one or more Special User Info fields. The Common Info field and the one or more Special User Info fields and may be encoded to solicit (i.e., trigger) a trigger-based (TB) Frequency Aggregated Physical layer Protocol Data Unit (PPDU) (FA-PPDU) that includes more than one PPDU of at least two different physical layer (PHY) types from the two or more STAs or groups of STAs. In these embodiments, the different PHY types may include high-efficiency (HE), Extremely High Throughput (EHT), Ultra-High Rate (UHR), and UHR+, although the scope of the embodiments is not limited in this respect. In these embodiments, the AP may decode the FA-PPDU received from the two or more STAs.

Accordingly, an AP can trigger a FA-PPDU that includes TB PPDUs of different PHY types. For example, the FA-PPDU may comprise an HE PPDU transmitted in a first bandwidth by an HE STA and an EHT PPDU in a second bandwidth transmitted by an EHT STA. For example, the FA-PPDU may comprise an EHT PPDU transmitted in the first bandwidth by an EHT STA and an UHR PPDU in the second bandwidth transmitted by a UHR STA.

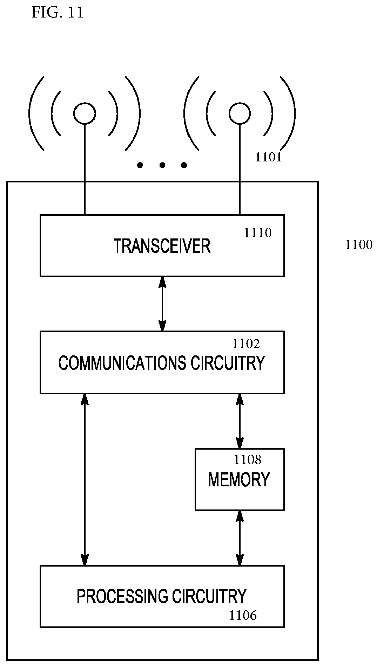

FIG. 11 illustrates a functional block diagram of wireless communication device in accordance with some embodiments. In one embodiment,

FIG. 11 illustrates a functional block diagram of a communication device (STA) that may be suitable for use as an AP STA, a non-AP STA or other user device in accordance with some embodiments. The wireless communication device 1100 may also be suitable for use as a handheld device, a mobile device, a cellular telephone, a smartphone, a tablet, a netbook, a wireless terminal, a laptop computer, a wearable computer device, a femtocell, a high data rate (HDR) subscriber device, an access point, an access terminal, or other personal communication system (PCS) device.

The wireless communication device 1100 may include communications circuitry 1102 and a transceiver 1110 for transmitting and receiving signals to and from other communication devices using one or more antennas 1101. The communications circuitry 1102 may include circuitry that can operate the physical layer (PHY) communications and/or medium access control (MAC) communications for controlling access to the wireless medium, and/or any other communications layers for transmitting and receiving signals. The wireless communication device 1100 may also include processing circuitry 1106 and memory 1108 arranged to perform the operations described herein. In some embodiments, the communications circuitry 1102 and the processing circuitry 1106 may be configured to perform operations detailed in the above figures, diagrams, and flows.

In accordance with some embodiments, the communications circuitry 1102 may be arranged to contend for a wireless medium and configure frames or packets for communicating over the wireless medium. The communications circuitry 1102 may be arranged to transmit and receive signals. The communications circuitry 1102 may also include circuitry for modulation/demodulation, upconversion/downconversion, filtering, amplification, etc. In some embodiments, the processing circuitry 1106 of the wireless communication device 1100 may include one or more processors. In other embodiments, two or more antennas 1101 may be coupled to the communications circuitry 1102 arranged for sending and receiving signals. The memory 1108 may store information for configuring the processing circuitry 1106 to perform operations for configuring and transmitting message frames and performing the various operations described herein. The memory 1108 may include any type of memory, including non-transitory memory, for storing information in a form readable by a machine (e.g., a computer). For example, the memory 1108 may include a computer-readable storage device, read-only memory (ROM), random-access memory (RAM), magnetic disk storage media, optical storage media, flash-memory devices and other storage devices and media.

In some embodiments, the wireless communication device 1100 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the wireless communication device 1100 may include one or more antennas 1101. The antennas 1101 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting device.

In some embodiments, the wireless communication device 1100 may include one or more of a keyboard, a display, a non-volatile memory port, multiple antennas, a graphics processor, an application processor, speakers, and other mobile device elements. The display may be an LCD screen including a touch screen.

Although the wireless communication device 1100 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the wireless communication device 1100 may refer to one or more processes operating on one or more processing elements.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus of an access-point station (AP), the apparatus comprising:
processing circuitry; and memory, wherein for communicating multi-user (MU) physical layer protocol data units (PPDUs) (MU-PPDUs) with plurality of non-AP stations (STAs) using dynamic channel switching, the processing circuitry is configured to:
acquire a transmission opportunity (TXOP) on a channel comprising a primary channel and one or more non-primary channels;
encode a channel switching indication frame for transmission during the TXOP, the channel switching indication frame requesting that at least some of the STAs switch from operating on the primary channel to operating on one of the non-primary channels;
decode a response frame from each of the STAs that are indicated to switch, each response frame received on the non-primary channel that an indicated STA is requested to switch to; and
wherein for a downlink (DL) transmission, the processing circuitry is configured to:
encode a DL MU-PPDU for transmission to scheduled STAs of the plurality, the DL MU-PPDU configurable to be comprised of a plurality of PPDUs of different physical layer (PHY) types, the plurality of PPDUs including:
at least a first PPDU for transmission on the primary channel to a first
STA that had not been instructed to switch to a non-primary channel; and
at least a second PPDU for transmission on one of the non-primary
channels to a second STA that had been instructed to switch to the one of the non-primary channels; and
after expiration of the TXOP, communicate with the STAs on the primary channel.

2. The apparatus of claim 1, wherein the channel switching indication frame is encoded to include channel switching information comprising, for each STA that is indicated to switch, a location of the non-primary channel to temporarily switch to and a duration that the STA is to temporarily remain on the non-primary channel.

3. The apparatus of claim 2, wherein the channel is a 320 MHz channel and for transmission of the DL MU-PPDU on the 320 MHz channel to the plurality of non-AP STAs wherein each STA having at least an 80 MHz capability:
the 320 MHz channel comprises a 160 MHz primary channel (P160) and a 160 MHz non-primary channel (S160), the P160 comprises a 80 MHz primary channel (P80) and a 80 MHz non-primary channel (S80), and
wherein the processing circuitry is configured to:
encode the first PPDU for transmission on the 80 MHz primary channel to a first 80 MHz STA that had not been instructed to switch to a non-primary channel, and encode the second PPDU for transmission on the 80 MHz non-primary channel to the second STA that had switched to the 80 MHz non-primary channel; and
encode a third PPDU for transmission on the 160 MHz non-primary channel to a third STA that had switched to the 160 MHz non-primary channel.

4. The apparatus of claim 3, wherein a PHY type of each PPDU of the DL MU-PPDU is configured to be compatible with a PHY type of a receiving STA, the PHY type encoded in an 80 MHz EHT universal signal (U-SIG) field of each PPDU.

5. The apparatus of claim 4, wherein for transmission of the DL MU-PPDU, the processing circuitry is configured to align preambles, orthogonal frequency division multiplexed (OFDM) symbol durations and cyclic prefix lengths of each 80 MHz transmission that comprises the first, second and third PPDUs.

6. The apparatus of claim 5, wherein when the third STA is a 160 MHz ultra-high rate (UHR) STA that was requested to switch from operating on the 160 MHz primary channel to the 160 MHz non-primary channel, the third PPDU comprises one of a high-efficiency (HE) PPDU, an extremely high throughput (EHT) PPDU and a UHR PPDU that is transmitted on the 160 MHz non-primary channel, wherein when the second STA is an 80 MHz UHR STA that was requested to switch from operating on the 80 MHz primary channel to the 80 MHz non-primary channel, the second PPDU comprises an HE PPDU transmitted on the 80 MHz non-primary channel, and
wherein when the first STA is an 80 MHz HE STA that had not been requested to switch to operating on a non-primary channel, the first PPDU comprises an HE PPDU transmitted on the 80 MHz primary channel.

7. The apparatus of claim 2, wherein the channel switching indication frame comprises a management frame and is transmitted to each STA of the plurality on the primary channel.

8. The apparatus of claim 7, wherein the management frame comprises an 80 MHz multi-user request to send transmission (MU-RTS TXS) frame that is repeated on each of the non-primary channels.

9. The apparatus of claim 8, wherein the response frames received from the STAs comprise clear-to-send (CTS) frames, the CTS frames being received from the STAs that are indicated to switch over one or more 20 MHz subchannels of an indicated non-primary channel.

10. The apparatus of claim 9, wherein the processing circuitry is further configured to decode a block acknowledgement (BA) frame received from the STAs, the BA frame being received from each STA that had been requested to switch to a non-primary channel on the non-primary channel, and
wherein each of the STAs that had been requested to switch to a non-primary channel is configured to switch back to the primary channel after transmission of the BA frame.

11. The apparatus of claim 2, wherein for reception of an uplink (UL) trigger-based (TB) MU PPDU from the plurality of STAs using dynamic channel switching, the processing circuitry is configured to:
after receipt of the response frame from each of the STAs that are indicated to switch, encode a trigger frame for transmission to each of the STAs that are indicated to switch on the non-primary channel that an indicated STA is requested to switch to, the processing circuitry configured to align preambles, orthogonal frequency division multiplexed (OFDM) symbol durations and cyclic prefix lengths of the trigger frames,
wherein the trigger frames are encoded to provide the STAs of the plurality a resource unit (RU) allocation for transmission of a TB PPDU; and
decode the TB MU PPDU comprised of a plurality of PPDUs configurable to be of different physical layer (PHY) types.

12. The apparatus of claim 11, wherein the plurality of PPDUs of the different PHY types include:
at least a first PPDU received on the primary channel from the first STA
that had not been instructed to switch to a non-primary channel, and at least a second PPDU received on one of the non-primary channels
from the second STA that had been instructed to switch to the one of the non-primary channels; and wherein after expiration of the TXOP, the AP is configured to communicate with the STAs on the primary channel.

13. The apparatus of claim 12, wherein after receipt of the TB MU PPDU, the processing circuitry is further configured to:
encode a block acknowledgement (BA) frame for transmission to each of the STAs in response to reception of one of the PPDUs, the BA being transmitted to each STA on a non-primary channel that had been requested to switch to a non-primary channel on the non-primary channel, and
wherein each of the STAs that had been requested to switch to a non-primary channel is configured to switch back to the primary channel after reception of the BA frame.

14. The apparatus of claim 13, wherein for triggering of the UL MU PPDU on a 320 MHz channel from the plurality of non-AP STAs, each STA having at least an 80 MHz capability, the processing circuitry is configured to:
encode each trigger frame for transmission over an 80 MHz portion of the 320 MHz channel.

15. The apparatus of claim 14, wherein the trigger frame is transmitted over an 80 MHz primary channel of the 320 MHz channel and duplicated over other 80 MHz portions of the 320 MHz channel.
